# EUROPEAN PATENT APPLICATION

(11) **EP 4 177 191 A1**
(43) Date of publication of application: **10.05.2023**
(21) Application number: 22203875.4
(22) Date of filing: 26.10.2022
(51) Int. Cl.: B65G 47/71, B65G 54/02

(54) **PACKAGE DISTRIBUTION APPARATUS AND METHOD OF DISTRIBUTING PACKAGES**

(30) Priority: 05.11.2021 EP 21206617
(71) Applicant: TETRA LAVAL HOLDINGS & FINANCE S.A., 1009 Pully (CH)
(72) Inventor: SACCHETTI, Elena, 41123 Modena (IT); MELOTTI, Massimo, 41123 Modena (IT); BASSISSI, Fabio, 41123 Modena (IT); GIORDANO, Francesco, 41123 Modena (IT)
(74) Representative: Tetra Pak - Patent Attorneys SE

(57) **Abstract**

There is described package distribution apparatus (1) comprising an upstream conveying device (3) configured to advance a succession of packages (2) along an upstream advancement path (P) and a distribution device (4) configured to selectively distribute the packages (2) advancing along the upstream advancement path (P) into a first flow (F1) of packages (2) advancing, in use, along a first downstream path (Q) and a second flow (F2) of packages (2) advancing, in use, along a second downstream path (R). The distribution device (4) comprises an endless carrier (15), a plurality of independent carts (16) moveably coupled to the endless carrier (15) and an actuation unit (17) configured to selectively advance the carts (16) along the endless carrier (15) and along an endless path (S). Each cart (16) comprises a pushing element (18) configured to interact with one or more respective packages (2) while the respective cart (16) advances, in use, along a contact portion (19) of the endless carrier (15) for directing the one or more respective packages (2) onto the second downstream path (R). The contact portion (19) is designed such that each pushing element (18) advances along a rectilinear path (T1) when directing, in use, the respective one or more packages (2) onto the second downstream path (R).

## Description

### TECHNICAL FIELD

The present invention relates to a package distribution apparatus for the distribution of packages 2, in particular packages 2 filled with a pourable product, even more particular packages 2 formed from a multilayer composite packaging material and filled with a pourable product.

Advantageously, the present invention also relates to a method of distributing packages 2, in particular packages 2 filled with a pourable product, even more particular packages 2 formed from a multilayer composite packaging material and filled with a pourable product.

### BACKGROUND ART

As is known, many liquid or pourable food products, such as fruit juice, UHT (ultra-high-temperature treated) milk, wine, tomato sauce, etc., are sold in composite packages made of a multilayer composite packaging material.

A typical example is the parallelepiped-shaped package for pourable food products known as Tetra Brik Aseptic (registered trademark), which is made by sealing and folding a laminated strip packaging material. The packaging material has a multilayer structure comprising a carton and/or paper base layer, covered on both sides with layers of heat-seal plastic material, e.g. polyethylene. In the case of aseptic packages for long-storage products, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Composite packages of this sort are normally produced within fully automatic filling plants, which at least form the composite packages from the multilayer composite packaging material and fill the composite packages with the pourable food product.

A typical filling plant comprises at least a filling machine, which forms the composite packages from the multilayer composite packaging material and which also fills the composite packages with the pourable food product.

Additionally, such filling plants also comprise downstream equipment, which receives the composite packages from the filling machine.

The downstream equipment may e.g. comprise a package distribution apparatus configured to divide a succession of advancing packages into at least two distinct flows of packages.

Even though the known package distribution apparatuses work satisfyingly well, a need is felt in the sector to further improve the known package distribution apparatuses and the respective method of distributing packages.

### DISCLOSURE OF INVENTION

It is therefore an object of the present invention to provide in a straightforward and low-cost manner a package distribution apparatus for distributing packages.

It is a further object of the present invention to provide in a straightforward and low-cost manner a method of distributing packages.

According to the present invention, there is provided a package distribution apparatus according to the independent claim 1.

Preferred embodiments of the package distribution apparatus are claimed in the claims being directly or indirectly dependent on claim 1.

According to the present invention, there is also provided a method according to the independent claim 11.

Preferred embodiments of the method are claimed in the claims being directly or indirectly dependent on claim 11.

### BRIEF DESCRIPTION OF THE DRAWINGS

A non-limiting embodiment of the present invention will be described by way of example with reference to the accompanying drawings, in which:
Figure 1 is a perspective view of a package distribution apparatus according to the present invention, with parts removed for clarity;
Figure 2 is a top view of a portion of the package distribution apparatus of Figure 1, with parts removed for clarity;
Figure 3 is an enlarged top view of details of the package distribution apparatus of Figure 1 highlighting some operational details, with parts removed for clarity;
Figure 4 shows a perspective view of a detail of the package distribution apparatus of Figure 1, with parts removed for clarity; and
Figure 5 is a perspective view of a further detail of the package distribution apparatus of Figure 1, with parts removed for clarity.

### BEST MODES FOR CARRYING OUT THE INVENTION

Number 1 indicates as a whole a package distribution apparatus for distributing a succession of packages 2, in particular advancing along an upstream advancement path P, at least into a first flow F1 of packages 2 and a second flow F2 of packages 2.

Preferably, packages 2 are filled with a pourable product, in particular a pourable food product, such as milk, cream, fruit juice, wine, tomato sauce, sugar, salt, emulsions, solutions containing solid particles (e.g. legumes).

Preferably, packages 2 may be formed from a multilayer composite packaging material.

In more detail, the multilayer composite packaging material may comprise at least a layer of fibrous material, such as e.g. a paper or cardboard layer, and at least two layers of heat-seal plastic material, e.g. polyethylene, interposing the layer of fibrous material in between one another. One of these two layers of heat-seal plastic material defines an inner face of the composite packages 2 eventually contacting the pourable food product packaged within packages 2.

According to some possible non-limiting embodiments, the multilayer composite packaging material may also comprise a layer of gas- and light-barrier material, e.g. aluminum foil or ethylene vinyl alcohol (EVOH) film, in particular being arranged between one of the layers of the heat-seal plastic material and the layer of fibrous material. In particular, the multilayer composite packaging material may also comprise a further layer of heat-seal plastic material being interposed between the layer of gas- and light-barrier material and the layer of fibrous material.

According to some preferred non-limiting embodiments, packages 2 are obtained within an automatic packaging machine. In particular, the automatic packaging machine may be arranged upstream of package distribution apparatus 1; package distribution apparatus 1 may receive packages 2 from the automatic packaging machine.

According to some preferred non-limiting embodiments, the multilayer composite packaging material may be provided in the form of a web, in particular being wound up on a bobbin. Accordingly, the automatic packaging machine may be configured to sterilize, to form, seal, fill and cut the web so as to obtain packages 2 being filled with the pourable product.

In more detail, the web may comprise a succession of connected blanks. In particular, the blanks are defined by a succession of repeated patterns provided on the web, preferably each pattern defining at least partially the aesthetical appearance of the finalized package 2.

Alternatively, the multilayer composite packaging material may be provided in the form of single package blank, which, in use, are singularly formed and filled.

In more detail, each package 2 may extend along a longitudinal axis and has a longitudinal seam portion (extending along the respective longitudinal axis) and a pair of transversal sealing bands, in particular a transversal top sealing band and a transversal bottom sealing band. In particular, each composite package 2 may have a substantially parallelepiped structure.

Furthermore, each package 2 may comprise at least two transversal walls (being transversal to the respective longitudinal axis) and being disposed at opposite sides of package 2 and a side walls extending between the transversal walls.

More specifically, one respective transversal wall of each package 2 may define a bottom wall and the other respective transversal wall may define a top wall. In particular, the bottom wall may define a support surface adapted to be placed on a (horizontal) plane or any other kinds of support.

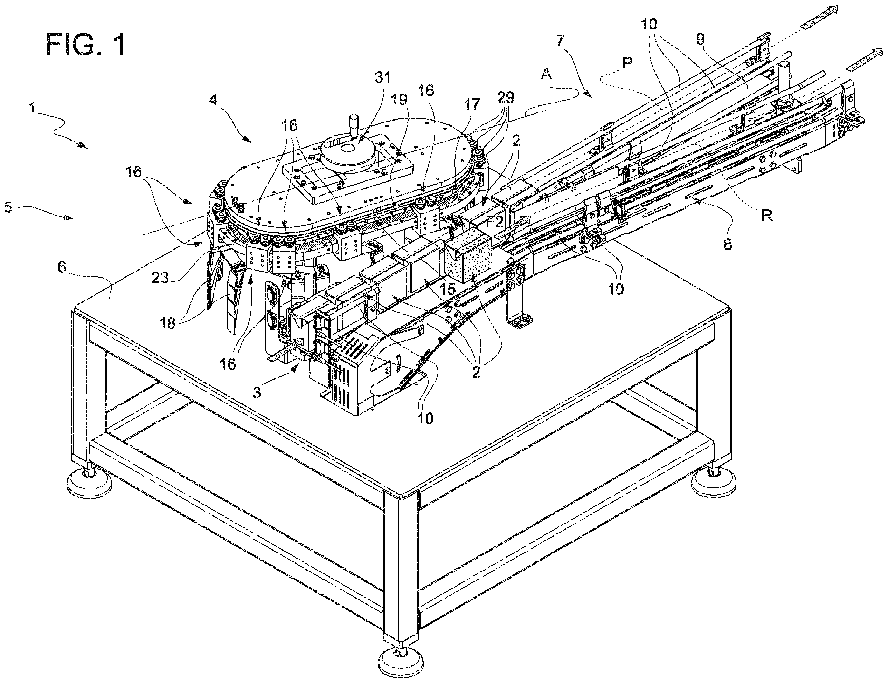

With particular reference to Figures 1, package distribution apparatus 1 may comprise
- an upstream conveying device 3 configured to advance the succession of packages 2 along upstream advancement path P; and
- a distribution device 4 configured to selectively distribute the succession of packages 2 advancing along upstream advancement path P into first flow F1 of packages 2 advancing, in use, along a first downstream path Q and second flow F2 of packages 2 advancing, in use, along a second downstream path R, in particular first downstream path R being distinct from second downstream path Q.

Preferably, package distribution apparatus 1 may also comprise a support structure 5 carrying upstream conveying device 3 and distribution device 4. In particular, support structure 5 may comprise a support table 6 at least partially carrying distribution device 4 and upstream conveying device 3.

Moreover, package distribution device 1 may comprise:
- a first downstream conveying device 7 configured to advance first flow F1 of packages 2 along first downstream advancement path Q; and
- a second downstream conveying device 8 configured to advance second flow F2 packages 2 along second downstream path R.

Preferably, each one of upstream conveying device 3, first downstream conveying device 7 and second downstream conveying device 8 may comprise a respective conveyor belt 9 configured to advance the respective packages 2 along respectively upstream advancement path P, first downstream advancement path Q and second downstream advancement path R.

Even more preferably, each one of upstream conveying device 3, first downstream conveying device 7 and second downstream conveying device 8 may comprise a respective lateral delimiting group, in particular having a plurality of lateral delimiting bars 10, configured to laterally delimit movement of the respective packages 2.

According to the specific embodiment shown, upstream advancement path P and first downstream path Q may both be rectilinear. In particular, first downstream path Q may be a direct continuation of upstream advancement path P; in other words, upstream advancement path P and first downstream path Q may define a single rectilinear path. According to the specific embodiment shown, first downstream path Q is inclined at an angle with respect to second downstream path R.

In particular, upstream conveying device 3 and first downstream conveying device 7 may be realized as a single conveying device.

According to the specific embodiment shown, distribution device 4 may be configured to interact with these packages 2 of the succession of packages 2 advancing along upstream advancement path P which shall be part of second flow F2 and/or which shall advance along second downstream advancement path R and/or which shall be transferred to second downstream conveying device 8.

According to some preferred non-limiting embodiments, at least a portion of second downstream advancement path R may have a rectilinear shape.

Moreover, distribution device 4 may be configured to not interact with these packages 2 of the succession of packages 2 advancing along upstream advancement path P which shall be part of first flow F1 and/or which shall advance along first downstream advancement path Q and/or which shall be transferred to first downstream conveying device 7.

In other words, according to the present non-limiting embodiment, packages 2 of the succession of packages 2 may automatically make part of first flow F1 without the specific intervention of distribution device 4 and packages 2 of the succession of packages 2 which shall make part of second flow F2 require the specific intervention of distribution device 4.

With particular reference to Figures 1 to 4, distribution device 4 comprises:
- an endless carrier 15;
- a plurality of independent carts 16 moveably coupled to endless carrier 15; and
- an actuation unit 17 configured to selectively advance carts 16 along endless carrier 15 and along an endless path S, in particular defined by (the shape of) endless carrier 15.

Preferably, the endless path S extends or is included in a horizontal plane, perpendicular to a weight force.

In more detail, each cart 16 comprises a pushing element 18 configured to interact with one or more respective packages 2 of the succession of packages 2 advancing, in use, along upstream advancement path P while the respective cart 16 advances, in use, along a contact portion 19 of endless carrier 15 for directing the one or more respective packages 2 onto second downstream path R and/or onto second downstream conveying device 8, in particular such that these packages 2 form part of second flow F2.

Moreover, contact portion 19 is designed such that each pushing element 18 advances, in use, along a rectilinear path T1 when directing, in use, the respective one or more packages 2 onto second downstream path R and/or onto second downstream conveying device 8.

Moreover, carts 15 are configured such that advancement of carts 15, in use, result in the respective pushing elements 18 to transversally move the respective package 2 or the respective packages 2 with respect to upstream advancement path P.

It should be noted that, in use, during transfer of packages 2 from upstream conveying device 3 onto second downstream conveying device 8 movement of packages 2 can be described by a first movement component into a direction parallel to upstream advancing path P and a second movement component into a direction transversal to upstream advancing path P. In particular, these packages 2, which are transferred onto second downstream conveying device 8 move along a rectilinear transition path.

By guaranteeing that pushing elements 18 move along rectilinear path T1 one guarantees a gentle transfer of these packages 2, which shall form part of second flow F2.

Preferably, rectilinear path T1 is transversal to upstream advancement path P. Even more preferably, rectilinear path T1 and upstream advancement path P may define an acute angle ranging between 10° to 80°, in particular between 20° to 70°, even more particular between 30° to 60°.

In more detail, in use, pushing elements 18 may advance along an annular path T having rectilinear path T1 while the respective carts 16 advance along the respective endless path S.

In particular, rectilinear path T1 extends from a contact station at which pushing elements 18 start to contact, in use, the respective packages 2 and a release station at which pushing elements 18 start to lose contact with the respective packages 2. In other words, in use, each pushing elements 18 starts and terminates to transversally move the respective package 2 or the respective packages 2 at respectively the contact station and the release station.

In particular, the release station is downstream from the contact station along annular path T.

Moreover, annular path T may also comprise at least one curved path T2 being arranged downstream from rectilinear path T1 along annular path T.

In particular, curved path T2 may extend from the release station. In other words, when pushing elements 18 start to loose contact with the respective packages 2, pushing elements 18 start to advance from a rectilinear motion profile to a curved one.

Preferably, each cart 16 advances, in use, along a rectilinear portion S1 of endless path S such that the respective pushing element 18 advances, in use, along rectilinear path T1, and in particular each cart 16 advances, in use, along a curved portion S2 of endless path S, downstream from rectilinear portion S1 along endless path S, such that the respective pushing element 18 advances, in use, along curved path T2.

Advantageously, distribution device 4, in particular endless carrier 15, is inclined with respect to upstream advancement path P. This renders it possible to gently move packages 2 onto second downstream advancement path R.

According to the specific embodiment shown, pushing elements 18 are configured to contact and transversally move one respective package 2 while advancing along rectilinear path T1.

In alternative, pushing elements 18 could be configured to contact and transversally move a plurality of respective packages 2 while advancing along rectilinear path T1.

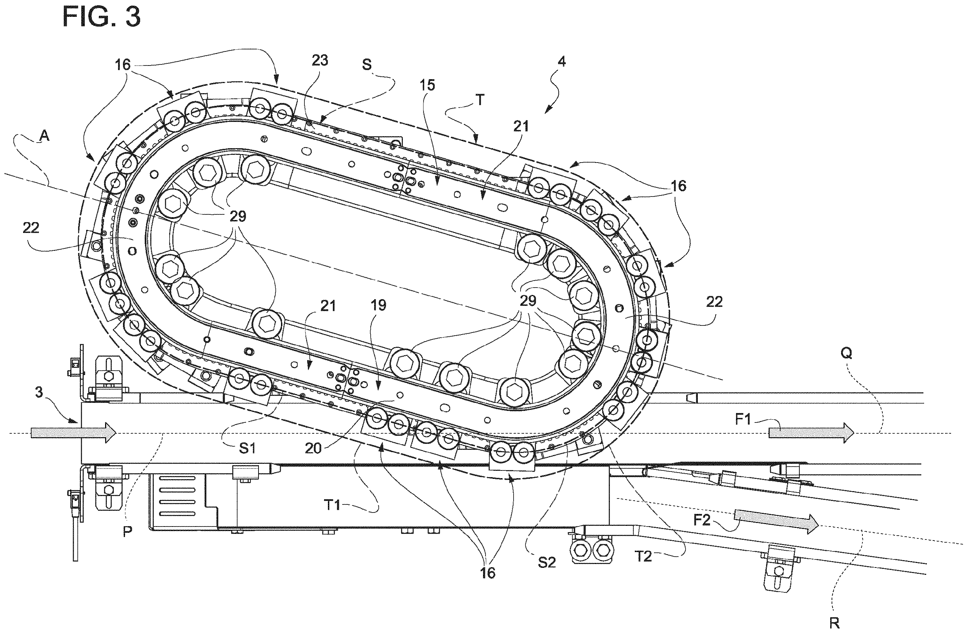

With particular reference to Figure 3, contact portion 19 may comprise at least a rectilinear section 20 being inclined with respect to upstream advancement path P. In particular, an imaginary extension of rectilinear section 20 may describe together with upstream advancement path P an angle ranging between 10° to 80°, in particular between 20° to 70°, even more particular between 30° to 60°. Moreover, each cart 16 advances, in use, along the rectilinear section 20 when the respective pushing element 18 directs, in particular transversally moves, in use, the respective one or more packages 2 onto the second downstream path R and/or onto second downstream conveying device 8.

In further detail, endless carrier 15 may have an annular shape.

Preferably, endless carrier 15 may comprises at least one rectilinear track 21 having rectilinear section 20.

More specifically, endless carrier 15 may comprise a plurality of rectilinear tracks 21 and a plurality of curved tracks 22.

In the specific embodiment disclosed, endless track 15 has an oval shape.

In particular, endless carrier 15 may comprise two rectilinear tracks 21 spaced apart from and parallel to one another and two opposed curved tracks 22 connecting to rectilinear tracks 21.

According to some preferred non-limiting embodiments, endless carrier 15 may comprise a symmetry axis A, in particular being inclined with respect to upstream advancement path P. Preferably, symmetry axis A may be parallel to rectilinear section T1 and/or the rectilinear track 21 having the section defining and/or having rectilinear section 20.

Even more preferably, symmetry axis A may describe together with upstream advancement path P an angle ranging between 10° to 80°, in particular between 20° to 70°, even more particular between 30° to 60°.

According to the specific embodiment shown, endless carrier 15 may be arranged above actuation unit 17. Additionally, endless carrier 15 may be also transversally spaced from actuation unit 17.

Alternatively, endless carrier 15 may be arranged below and/or substantially on the same height level as actuation unit 17.

According to some preferred non-limiting embodiments, actuation unit 17 is configured to selectively generate an electromagnetic field for selectively interacting with the plurality of carts 16 and for selectively advancing the plurality of carts 16 along endless path S.

Preferably, actuation unit 17 may comprise an annular housing 23 and a plurality of coils arranged along and within annular housing 23.

Moreover, actuation unit 17 may comprise a powering unit operatively coupled to the plurality of coils and configured to selectively power each one of the plurality of coils.

It should be noted that the selective advancement of carts 16 means that actuation unit 17 may accelerate and decelerate each cart 16 independently from one another. Certainly, actuation unit 17 operates such to avoid any collisions between carts 16.

According to some preferred non-limiting embodiments, actuation unit 17 may be configured to control an advancement velocity of each cart 16 such that during directing and/or transversally moving the respective one or more packages 2 onto second downstream path R and/or second downstream conveying device 8, the advancement velocity corresponds to a velocity of the respective one or more packages 2. In this way, one further improves a gentle treatment of packages 2.

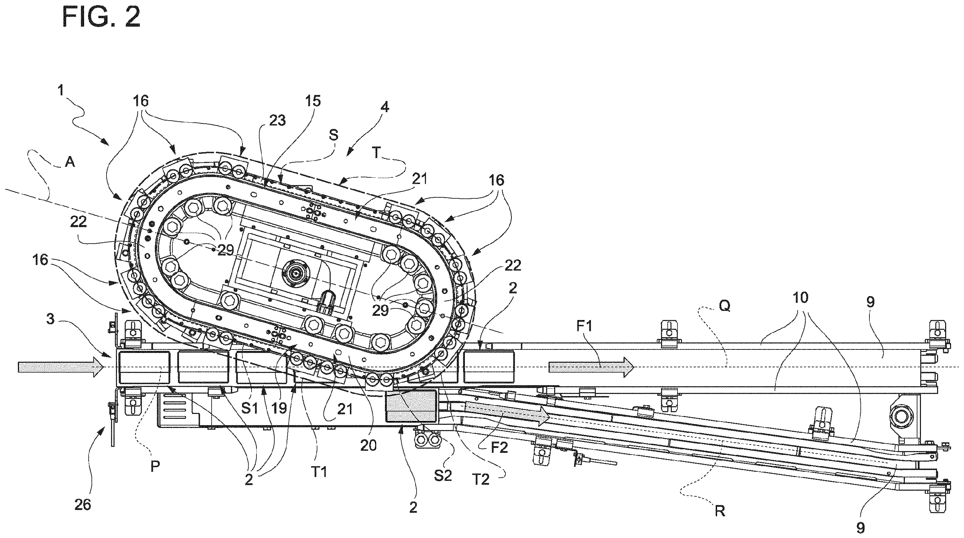

With particular reference to Figures 1 and 2, package distribution apparatus 1 may also comprise a detection device 26 configured to determine a relative position of packages 2 while advancing along upstream advancement path P. In particular, detection device 26 may be operatively connected to actuation unit 17 and/or to a control unit of package distribution apparatus 1.

Preferably, actuation unit 17 may be configured to advance each cart 16 in dependence of the determined relative position as determined by detection device 26. In particular, actuation unit 17 is configured to synchronize advancement of carts 16 with respect to the determined relative position such that pushing elements 18 get into contact with the respective packages 2 at the contact station.

Preferably, carts 16 may advance at varying velocities along endless path S including rests.

According to some possible non-limiting embodiments, actuation unit 17 may be configured to arrange each cart 16 at a wait position and to move each cart 16 such that the respective pushing element 18 starts to contact and to transversally move the respective package 2 or the respective packages 2 at the right moment.

Preferably, actuation unit 17 may be configured to queue carts 16 along a portion of endless carrier 15 upstream of rectilinear section 20.

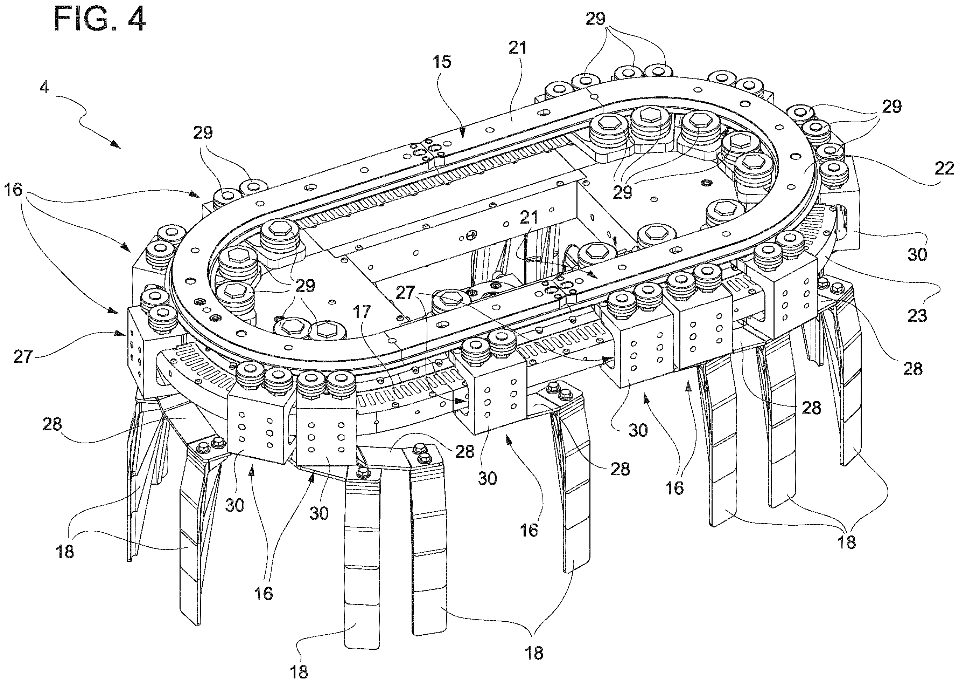

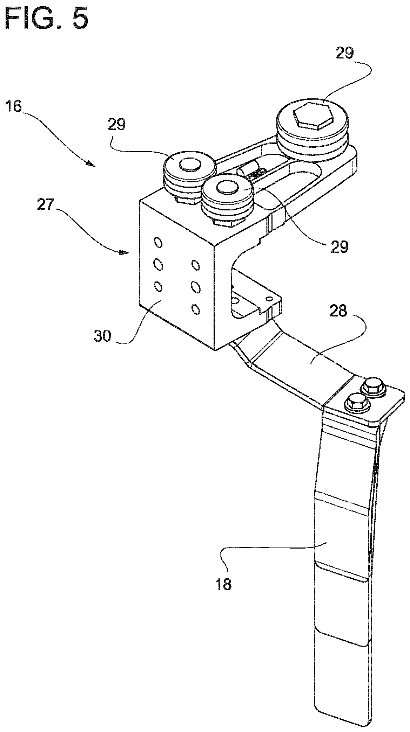

With particular reference to Figures 4 and 5, each cart 16 may comprise a main body 27 moveably attached to endless carrier 15 and a support bar 28 connected to and extending from main body 27 and carrying the respective pushing element 18. In particular, each support bar 28 is elongated along a direction having at least a horizontal component. Therefore, each pushing element 18 is displaced from the respective main body 27, in a plant view.

Preferably, each support bar 28 may be arranged such that each pushing element 18 is arranged upstream from the respective main body 27 with respect to endless path S. In this way it is possible to guarantee a gentle contact between each pushing element 18 and the respective package 2 or packages 2. In particular, the motion of each pushing elements 18 follows the respective package and an abrupt contact (like a kick) between the pushing element and the package is prevented. Additionally, in this way one obtains a motion profile of carts 16 as expressed by endless path S to be different than a motion profile of the respective pushing elements 18 as expressed by annular path T. In fact, the pushing element 18 is placed frontward of the instant center of rotation of the respective main body 27.Preferably, each support bar 28 may be non-moveably fixed to the respective main body 27 and may non-moveably carry the respective pushing element 18; i.e. each support bar 28, the respective main body 27 and the respective pushing element 18 cannot execute any relative motions with respect to one another.

Furthermore, according to such an embodiment annular path T is solely determined by endless path S and the relative position of pushing elements 18 with respect to their respective main bodies 27.

According to the specific embodiment disclosed, each main body 27 may moveably couple to endless carrier 15 and at least partially surround actuation unit 17, in particular annular housing 23.

In more detail, each main body 27 may comprise a plurality of wheels 29 contacting endless carrier 15 and configured to move along endless carrier 15. In particular, the respective plurality of wheels 29 of each main body 27 may interpose and/or clamp a portion of endless carrier 15 between one another.

Moreover, main body 27 may comprise a C-shaped or L-shaped structure 30 carrying the respective plurality of wheels 29 and partially surrounded annular housing 23.

Preferably, each main body 27, in particular the respective C-shaped or L-shaped structure 30, may comprise a ferromagnetic and/or magnetic element for interacting with the electromagnetic field. Alternatively, each main body 27, in particular the respective C-shaped or L-shaped structure 30, may at least partially be formed from a ferromagnetic and/or magnetic material.

According to some preferred non-limiting embodiments, package distribution apparatus 1, in particular distribution device 4, may comprise a height adjustment group 31 (only partially shown) configured to control a relative height position between endless carrier 15 and/or carts 16 and/or pushing elements 18 and upstream conveying device 3 and/or first downstream conveying device 7 and/or second downstream conveying device 8.

In use, package distribution apparatus 1 divides the succession of packages 2 advancing along upstream advancement path P into first flow F1 of packages 2 advancing along first downstream advancement path Q and into second flow F2 of packages 2 advancing along second downstream advancement path R.

In particular, package distributing apparatus 1 may receive packages 2 from the automatic packaging machine producing packages 2.

In more detail, operation of package distributing apparatus 1 and the respective method of distributing the succession of packages 2 comprises the steps of:
- advancing the succession of packages 2 along upstream advancement path P; and
- selectively distributing the succession of packages 2 advancing along the upstream advancement path P into first flow F1 of packages (2) advancing along first downstream path Q and second flow F2 of packages 2 advancing along second downstream path R.

In further detail, the step of selectively distributing comprises the sub-steps of:
- selectively advancing carts 16 along endless path S; and
- directing one or more respective packages 2 onto second downstream path R and/or second downstream conveyor 8 by interaction with the respective pushing elements 18 while the respective cart 16 advances along contact portion 19 of endless carrier 15.

During the sub-step of directing, contact portion 19 guarantees that each pushing element 18 advances along rectilinear path T1.

Preferably, during the sub-step of directing, each pushing element 18 transversally moves (with respect to upstream advancement path P) the respective package 2 or the respective packages 2 while advancing along rectilinear path T1.

Moreover, during the sub-step of selectively advancing, each cart 16 advances along rectilinear section 20 when the respective pushing element 18 directs and/or transversally moves the respective one or more packages 2 onto second downstream path R and/or onto second downstream conveying device 8.

Preferably, during the sub-step of selectively advancing, the advancement velocity of each cart 16 is such that during the sub-step of directing the advancement velocity corresponds to the velocity of the respective one or more packages 2.

More specifically, during the sub-step of advancing, actuation unit 17 may control advancement of each cart 16 independently from the advancement of the other carts 16. This means that each cart 16 is accelerated and decelerated independently from the others.

Moreover, during the sub-step of advancing, actuation unit 17 may also selectively stop advancement of each cart 16 and to place each cart 16 into a wait position and to move each cart 16 such that the respective pushing element 18 starts to contact and to transversally move the respective package 2 or the respective packages 2 at the right moment.

More specifically, during the sub-step of selectively advancing, actuation unit 17 selectively generates an electromagnetic field for selectively interacting with the plurality of carts 16 and for selectively advancing the plurality of carts 16.

According to some preferred non-limiting embodiments, operation of package distributing apparatus 1 and the respective method of distributing the succession of packages 2 may also comprise the sub-step of detecting, during which a relative position of the one or more of the plurality of packages 2 is determined while advancing along the upstream advancement path 2.

Moreover, during the sub-step of selectively advancing, each cart 16 advances in dependence of the determined relative position so as to synchronize, e.g. in the direction of flow F1, the advancement of the respective pushing elements 18 with the respective one or more packages 2.

According to some preferred non-limiting embodiments, upstream conveying device 3 advances the succession of packages 2 along upstream advancement path, first downstream conveying device 7 advances packages 2 of first flow F1 along first downstream path Q and second downstream conveying device 8 advances packages 2 of second flow F2 along second downstream path R.

The advantages of package distribution apparatus 1 and/or the method of distributing packages 2 according to the present invention will be clear from the foregoing description.

In particular, operation of package distribution apparatus 1 allows to gently direct packages 2 onto second downstream advancement path R, e.g. due to synchronized longitudinal velocity.

Furthermore, operation of package distribution apparatus 1 permits to move packages 2 onto second downstream advancement path R at a constant transversal velocity. In other words, the velocity, during directing and/or transversally moving the respective one or more packages 2 onto second downstream path R and/or second downstream conveying device 8, may be constant.

Additionally, operation of package distribution apparatus 1 avoids the occurrence of any sudden impacts on packages 2.

Moreover, operation of package distribution apparatus 1 is compatible with a succession of zero-gap packages 2.

Clearly, changes may be made to package distribution apparatus 1 and/or the method of distributing packages 2 as described herein without, however, departing from the scope of protection as defined in the accompanying claims.

According to some possible embodiments not shown, annular housing 23 may comprise and/or carry endless carrier 15.

## Claims

1. Package distribution apparatus (1) for distributing a succession of packages (2) comprising:
- an upstream conveying device (3) configured to advance a succession of packages (2) along an upstream advancement path (P); and
- a distribution device (4) configured to selectively distribute the packages (2) advancing along the upstream advancement path (P) into a first flow (F1) of packages (2) advancing, in use, along a first downstream path (Q) and a second flow (F2) of packages (2) advancing, in use, along a second downstream path (R);
wherein the distribution device (4) comprises:
- an endless carrier (15);
- a plurality of independent carts (16) moveably coupled to the endless carrier (15); and
- an actuation unit (17) configured to selectively advance the carts (16) along the endless carrier (15) and along an endless path (S);
wherein each cart (16) comprises a pushing element (18) configured to interact with one or more respective packages (2) while the respective cart (16) advances, in use, along a contact portion (19) of the endless carrier (15) for directing the one or more respective packages (2) onto the second downstream path (R);
wherein the contact portion (19) is designed such that each pushing element (18) advances along a rectilinear path (T1) when directing, in use, the respective one or more packages (2) onto the second downstream path (R).

2. Package distribution apparatus according to claim 1, wherein the contact portion (19) comprises at least a rectilinear section (20) being inclined with respect to the upstream advancement path (P);
wherein each cart (16) advances, in use, along the rectilinear section (20) when the respective pushing element (18) directs, in use, the respective one or more packages (2) onto the second downstream path (R).

3. Package distribution apparatus according to claim 2, wherein the endless carrier (15) comprises at least one rectilinear track (21) having the rectilinear section (20) of the contact portion (19).

4. Package distribution apparatus according to any one of the preceding claims, wherein the endless carrier (15) is inclined with respect to the upstream advancement path (P) and the endless carrier (15) comprises a symmetry axis (A) being inclined with respect to the upstream advancement path (P).

5. Package distribution apparatus according to any one of the preceding claims, wherein each cart (16) comprises a main body (27) moveably coupled to the endless carrier (15) and a support bar (28) connected to and extending from the main body (27) and carrying the respective pushing element (18).

6. Package distribution apparatus according to claim 5, wherein each support bar (27) is arranged such that each pushing element (18) is arranged upstream from the respective main body (27).

7. Package distribution apparatus according to any one of the preceding claims, wherein the actuation unit (17) is configured to control an advancement velocity of each cart (16) such that during directing the respective one or more packages (2) onto the second downstream path (R), the advancement velocity corresponds to a velocity of the respective one or more packages (2).

8. Package distribution apparatus according to any one of the preceding claims, further comprises a detection device (26) configured to determine a relative position of one or more of the plurality of packages (2) advancing along the upstream advancement path (P);
wherein the actuation unit (17) is configured to advance each cart (16) in dependence of the determined relative position.

9. Package distribution apparatus according to any one of the preceding claims, wherein the actuation unit (17) is configured to selectively generate an electromagnetic field for selectively interacting with the plurality of carts (16) and for selectively advancing the plurality of carts (16).

10. Package distribution apparatus according to any one of the preceding claims, further comprising:
- a first downstream conveying device (7) configured to advance one or more packages (2) along the first downstream advancement path (Q); and
- a second downstream conveying device (8) configured to advance one or more packages (2) along the second downstream path (R).

11. Package distribution apparatus according to any one of the preceding claims, wherein the endless path (S) extends in a horizontal plane, perpendicular to a weight force.

12. Method of distributing a succession of packages (2) comprising the steps of:
- advancing a succession of packages (2) along an upstream advancement path (P); and
- selectively distributing the succession of packages (2) advancing along the upstream advancement path (P) into a first flow (F1) of packages (2) advancing, in use, along a first downstream path (Q) and a second flow (F2) of packages (2) advancing, in use, along a second downstream path (R);
wherein the step of selectively distributing comprises the sub-steps of:
- selectively advancing a plurality of carts (16), each having a respective pushing element (18) and each being moveably arranged on an endless carrier (15), along an endless path (S); and
- directing one or more respective packages (2) onto the second downstream path (R) by interaction with the respective pushing elements (18) while the respective cart (16) advances, in use, along a contact portion (19) of the endless carrier (15);
wherein the contact portion (19) is designed such that each pushing element (18) advances during the sub-step of directing along a rectilinear path (T1).

13. Method according to claim 12, wherein the contact portion (19) comprises at least a rectilinear section (20) being inclined with respect to the upstream advancement path (P);
wherein during the sub-step of selectively advancing, each cart (16) advances along the rectilinear section (20) when the respective pushing element (18) directs the respective one or more packages (2) onto the second downstream path (R).

14. Method according to claim 12 or 13, wherein during the sub-step of selectively advancing, an advancement velocity of each cart (16) is such that, during the sub-step of directing, the advancement velocity corresponds to a velocity of the respective one or more packages (2).

15. Method according to any one of claims 12 to 14, wherein the step of distributing further comprises the sub-step of detecting, during which a relative position of the one or more of the plurality of packages (2) is determined while advancing along the upstream advancement path (P);
wherein during the sub-step of selectively advancing, each cart (16) advances in dependence of the determined relative position.

16. Method according to any one of claims 12 to 15, wherein during the sub-step of selectively advancing, an actuation unit (17) selectively generates an electromagnetic field for selectively interacting with the plurality of carts (16) and for selectively advancing the plurality of carts (16).
